# EUROPEAN PATENT APPLICATION

(11) **EP 1 162 821 A1**
(43) Date of publication of application: **12.12.2001**
(21) Application number: 01202015.2
(22) Date of filing: 28.05.2001
(51) Int. Cl.: H04N 1/047

(54) **Method and apparatus for precisely aligning digital images on motion picture film created by a raster scan recorder**

(30) Priority: 06.06.2000 US 209750 P; 10.01.2001 US 757922
(71) Applicant: EASTMAN KODAK COMPANY, Rochester, New York 14650 (US)
(72) Inventor: Yarid, Rockwell N., Rochester, New York 14650-2201 (US); Federico, Richard J., Rochester, New York 14650-2201 (US)
(74) Representative: Parent, Yves

(57) **Abstract**

In high-speed raster film recording, a method and apparatus for precise vertical alignment of images to reference perforations without pausing or adjusting the film transport mechanism, and without pausing or adjusting the horizontal beam deflection mechanism. The system (400 and 500, 600 or 700) senses the phase and hence time difference between the occurrence of the Top of Frame signal (upon detecting the reference perforation) and the next Linestart signal (generated each time the horizontal writing beam deflector (506, 606, 706) is in the position to begin writing a new scan line), and in response thereto, vertically deflects the writing beam by optical deflection means (502, 610, 730, 740, 750) up to one-half a scan line in either vertical direction.

## Description

### FIELD OF THE INVENTION

The present invention relates to raster scan recording of motion picture film in general, and to correcting vertical misalignment of images in particular.

### BACKGROUND OF THE INVENTION

As is well known, raster scan motion picture recording involves for each frame, exposing moving film to a focused, oscillating writing beam at discrete locations ("pixels") along a series of scan lines that are perpendicular to the direction of film travel. For color recording, three primary color (e.g., red, blue and green, or yellow, cyan and magenta) writing beams are converged at each pixel location, with the relative beam intensities, controlled by light modulators, determining the perceived color of the pixel.

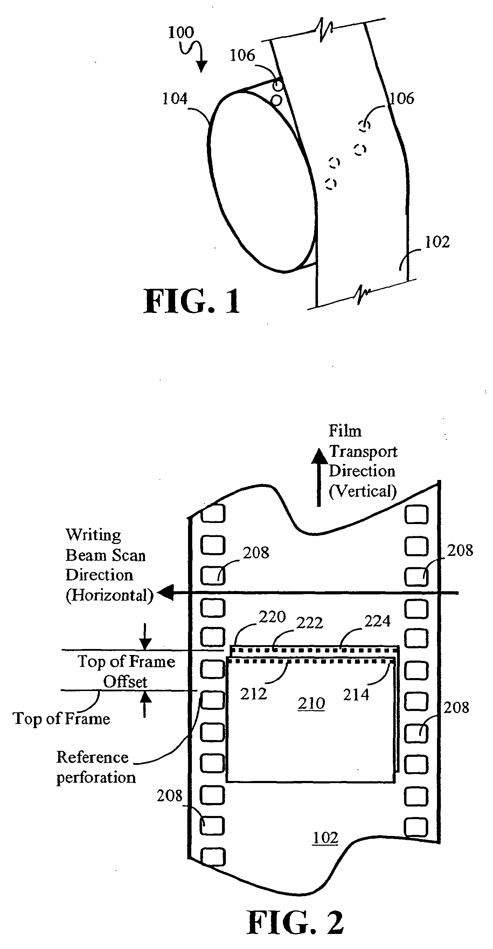

The film transport mechanism 100 in Figure 1 generally illustrates a means of high-speed film transport, which is also compatible with the present invention. A filmstrip 102 is held into contact with a rotating drum 104 serving as a substrate by locating the filmstrip and drum to cause a normal force, and by creating an internal vacuum which acts upon the filmstrip through many vacuum holes 106.

In typical raster scan film recorders, a rapidly rotating polygon mirror having several deflection facets reflects a writing beam in a horizontal oscillatory manner to create the scan lines. The film transport speed is such that the scan lines are appropriately spaced apart to create the correct vertical height ("aperture size") of each image. As is shown in Figure 2, a filmstrip 102 has many perforations 208, one of which serves as a reference perforation for each new image. When the reference perforation is detected (See, for example, U.S. Patent Number 5,107,127), a "Top of Frame" signal is generated. Depending on when a Linestart signal (generated each time the polygon mirror is ready to begin writing a new scan line) is detected, a new image can start closer to the reference perforation, as with the example image 210, or farther away from the reference perforation, as with the example image 220. Each new image (210, 220) begins with a scan line (212, 222) having a multitude of pixels (214, 224).

Where the film transport speed and the polygon mirror rotation speeds are constant―as is desirable―the time or phase difference between Top of Frame signals and Linestart signals often varies so that images are not recorded at uniform vertical locations. This can produce a jittery effect to a person subsequently viewing the recorded images, as well as other undesirable artifacts. There is also the possibility that film recorded in this manner may not meet applicable technical standards.

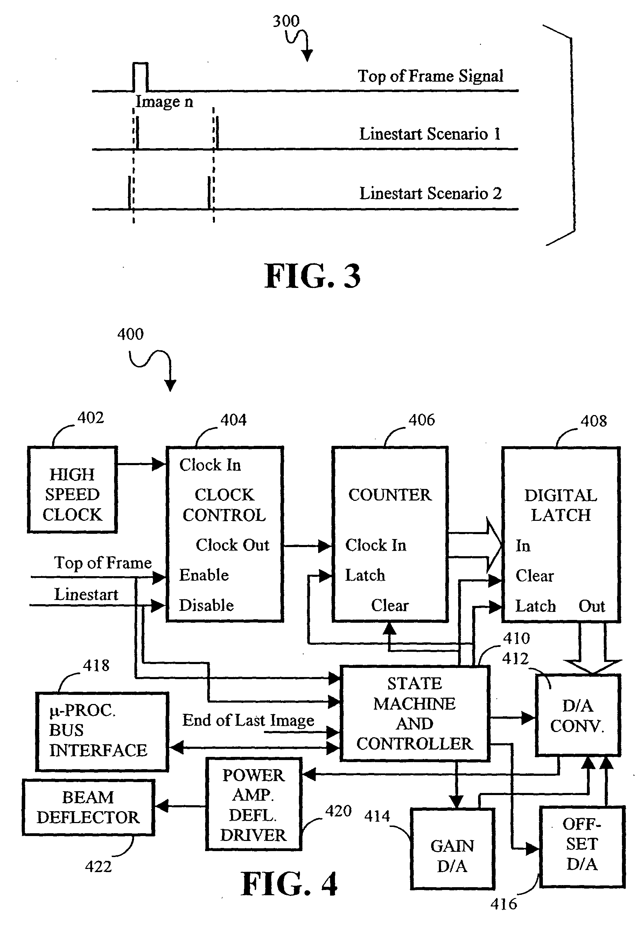

In the example timing diagram 300 of Figure 3, two vertical misalignment scenarios are presented. In Scenario 1, the Linestart signal is generated after the Top of Frame signal, and the first scan line begins later than optimal, resulting in an image like the one 210. In Scenario 2, the Linestart signal is generated before the Top of Frame signal, and the first scan line begins earlier than optimal, resulting in an image like the one 220.

The prior art has attempted to correct the problem of vertical misalignment by either adjusting the horizontal scan motion for each new frame, or adjusting the film transport motion. Such approaches are typified in U.S. Patent Numbers 5,264,872, 5,808,658 and 5,381,165. These approaches, however, are incompatible with a high-speed raster film recorder in which the film transport and scanning motions are constant.

Other approaches, such as the one described in U.S. Patent Number 5,208,796 mechanically shift an entire array of LEDs or other devices used to create the pixels, in order to compensate for vertical misalignment. However, as with the aforementioned patents, these approaches are for the much slower recording typified by copying machines, and are not suitable for high-speed raster scan recorders using writing beams to create the film images.

In view of the above, there is an unmet need to provide a high-speed raster scan film recorder where each image is vertically and precisely aligned without having to alter the timing of the film transport mechanism or the scan line timing.

### SUMMARY OF THE INVENTION

To address the unmet needs of the prior art identified *supra,* the present invention provides, in raster scan film recording with constant film transport speed along a first axis and constant periodic scan line motion along a second axis transverse to the first axis, a method of aligning each recorded image along the first axis. The method at least includes the steps of generating a first reference signal each time a reference perforation is detected in a moving filmstrip, and generating a second reference signal each time a scan line beam deflector for deflecting a writing beam parallel to the second axis is ready to begin moving the writing beam across a new scan line. The method also at least includes the steps of detecting the phase difference between the first and second reference signals, and in response to the phase difference, deflecting the writing beam along the first axis to begin the first scan line of each new filmstrip image at substantially the same distance from the reference perforation.

The present invention also provides, in raster scan film recording with constant film transport speed along a first axis and constant periodic scan line motion along a second axis transverse to the first axis, an apparatus for aligning each recorded image along the first axis. The method at least includes a second axis deflector adapted to deflect a writing beam parallel to the second axis for each scan line, a first reference signal generator adapted to generate a first reference signal each time a reference perforation is detected in a moving filmstrip, and a second reference signal generator adapted to generate a second reference signal each time the second axis deflector is ready to begin a new scan line. The apparatus also at least includes a phase detector adapted to detect the phase difference between the first and second reference signals, and a first axis deflector adapted to, in response to the phase difference, deflect the writing beam along the first axis to begin the first scan line of each new filmstrip image at substantially the same distance from the reference perforation.

### BRIEF DESCRIPTION OF THE DRAWINGS

Features and advantages of the present invention will become apparent to those skilled in the art from the description below, with reference to the following drawing figures, in which:
Figure 1 is a general illustration of a high-speed film transport system adapted for use with the present-inventive vertical alignment method and apparatus;
Figure 2 is an illustration of a filmstrip portion recorded by raster scan, whereby vertical misalignment of images occurs;
Figure 3 is a timing diagram with a Top of Frame signal, and two different scenarios where the relative occurrence of the Linestart signals causes vertical misalignment in either vertical direction;
Figure 4 is a schematic block diagram of the present-inventive vertical correction/alignment and writing beam driver circuitry;
Figure 5 is a first embodiment of the optical writing beam control apparatus using an actuated tilt mirror for vertical writing beam deflection;
Figure 6 is a second embodiment of the optical writing beam control apparatus using an actuated tilt plate for vertical writing beam deflection; and
Figure 7 is a third embodiment of the optical writing beam control apparatus using actuated tilt plates for vertically deflecting each primary color writing beam.

### DETAILED DESCRIPTION OF THE INVENTION

The present-inventive vertical alignment method apparatus for precise vertical alignment of images recorded by a high-speed raster scan recorder novelly determines the phase difference between the Top of Frame and Linestart signals, and optically deflects the writing beam, and hence scan lines, along the vertical axis according to the phase difference.

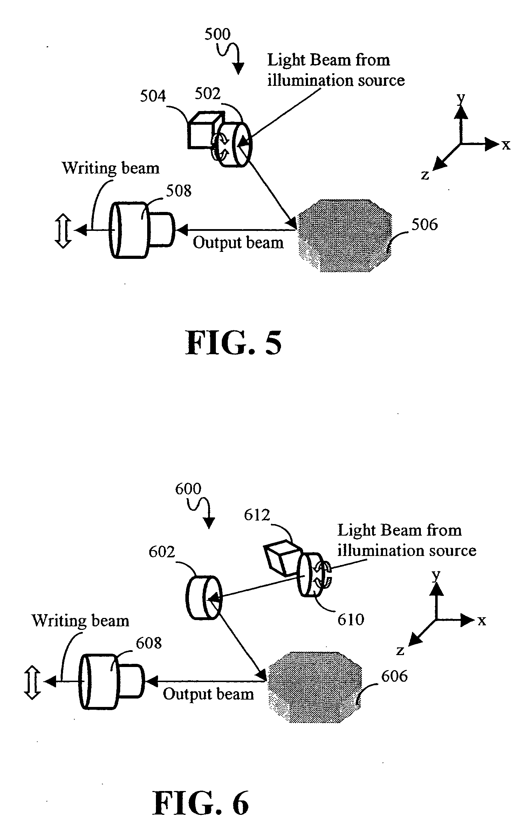

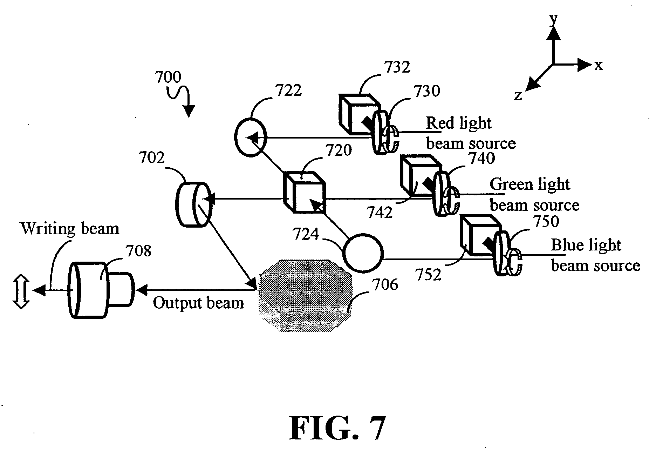

Vertical correction and driver circuitry 400 is shown in Figure 4. This circuitry is used in conjunction with a writing beam control apparatus (e.g., 500, 600 or 700), such as is shown in Figures 5-7. In Figure 5, for example, the writing beam control apparatus 500 nominally contains a rotating polygon mirror 506, and a final writing beam focuser 508. As is known in the art, the rotating polygon mirror deflects the writing beam in the horizontal direction to create the scan lines. The apparatus 500 novelly includes a vertical deflector fold mirror 502 which is swiveled around a horizontal axis to create a vertical deflection of a light beam (before it is focused and output as the writing beam). The amount of tilt in the mirror 502 is determined by an actuator 504, in direct response to the phase difference between the Top of Frame and Linestart signals.

The writing beam control apparatus 600 in Figure 6 is a variation of the apparatus in Figure 5. A fixed mirror 602, and an actuated, transmissive tilt plate 610 replace the deflector fold mirror and actuator 502 and 504. In typical usage, the tilt plate 610 is a plane-parallel glass plate. The light beam source is therefore displaced vertically through refraction needed by the tilted plate in accordance with the vertical correction signal received by an actuator 612.

In yet another variation, the input light beam is separated into primary color components, and each primary color beam component is displaced vertically, according to the phase difference between the Top of Frame signal and the Linestart signal. As with the other apparatuses, a polygon mirror scanner 606 deflects the output beam horizontally to create the pixels on the scan lines. A red light tilt plate 730 and an attached actuator 732 vertically displaces the red light beam according the aforementioned phase difference. The tilt plate-actuator combinations 740-742 and 750-752, likewise, provide vertical displacement of the green and blue light beams, respectively. The red, green and blue light sources (containing the appropriate amount of vertical displacement) are combined to form a single beam by a beam combiner 720. The red and blue beam components are deflected to the beam combiner 724 with the aid of mirrors 722 and 724, respectively. A fixed mirror 702 serves to deflect the combined light source to the polygon scanner 706.

Returning to Figure 4, the vertical correction and driver circuit ("optical deflection system") 400 is responsible for controlling the precise vertical alignment according to the present invention. A state machine 410 controls the circuit 400. The preferred embodiment uses a state machine for simplicity. However, it will be appreciated by those skilled in the art that other approaches can be used without departing from the scope of the present invention, including general purpose computers, Application Specific Integrated Circuits (ASICs), and others. The optical deflection system 400 can interface with a microprocessor and the like via a microprocessor bus interface 418.

A high-speed clock 402 generates pulses which are fed to an input of a clock control circuit 404. A clock signal is generated when a Top of Frame signal is received. The clock is disabled when a Linestart signal is received. A counter 406 begins counting when it receives the clock signal. The clock signal is generated at the rate of 1/256 of the time period for each scan line. This gives the present invention the ability to vertically place every image to a precision of within 1/256 of a scan line. Values ranging from 0 to 127 would deflect the writing beam opposite the direction of film transport, with 0 being approximately one-half of a scan line downward and the value 127 being approximately 1/256 of a scan line downward. Values 128 through 256 would deflect the writing beam in the direction of film transport, with 128 being approximately 1/256 of a scan line upward, and 256 being approximately one-half of a scan line upward. Alternatively, values 127 and 128 can represent a null value, for which the writing beam is not vertically deflected.

For higher resolution, a faster clock can be used, along with a counter having the ability to handle a higher count.

When the state machine receives a Linestart signal, it sends a latch signal to the counter 406, which causes the counter to latch the last count value and transfer it over a parallel bus to a digital latch 408. The count value represents the phase difference between the Top of Frame and Linestart signals.

Another latch signal from the state machine 410 causes the digital latch 408 to latch the count value and output it to a digital-to-analog converter 412. The resulting analog signal is amplified by a power amplifier and deflector driver 420, and then output to a beam deflector 422 to control the actuators to which vertical deflection devices are attached (See Figures 5, 6 and 7). Gain and offset circuits 414 and 416 provide the appropriate calibration of the digital-to-analog converter 412 so that a proportional deflection over the full range of the beam deflector's capabilities results.

In the preferred embodiment, the state machine and controller 410 has six states. State 0―the initial state―causes the state machine 410 to wait for a Top of Frame signal in response to the detection of a reference perforation. This state enables the clock control 404, and causes the counter 406 to begin counting. When the system receives a Linestart signal, the state machine 410 is placed in State 1, which disables the clock control 404 and stops the counter 406 from counting. In State 2, the value of the count from the counter 406 is latched into the digital latch 408 and output to the digital-to-analog converter 412.

In State 3, the system waits for an End of Last Image signal indicating the end of the current scan line. In State 4, the digital-to-analog converter begins converting the count into an analog control signal used (after amplification) to drive the beam deflector for the appropriate vertical deflection. After a set number of scan lines (predetermined by the image height) are written to complete the image, the state machine goes to transition State 5, and then returns to State 0 to await a new Top of Frame signal.

Variations and modifications of the present invention are possible, given the above description. However, all variations and modifications which are obvious to those skilled in the art to which the present invention pertains are considered to be within the scope of the protection granted by this Letters Patent.

## Claims

1. In raster scan film recording with constant film transport speed along a first axis and constant periodic scan line motion along a second axis transverse to said first axis, a method of aligning each recorded image along said first axis, said method comprising the steps of:
generating a first reference signal each time a reference perforation is detected in a moving filmstrip;
generating a second reference signal each time a scan line beam deflector for deflecting a writing beam parallel to said second axis is ready to begin moving said writing beam across a new scan line;
detecting the phase difference between said first and second reference signals; and
in response to said phase difference, deflecting said writing beam along said first axis to begin the first scan line of each new filmstrip image at substantially the same distance from said reference perforation.

2. The method in Claim 1, wherein deflection of said writing beam along said first axis is via an optical deflector.

3. The method in Claim 2, wherein said step of deflecting said writing beam along said first axis is carried out by the steps of:
providing an actuated, tiltable mirror; and
tilting said mirror in response to said phase difference to deflect said writing beam along said first axis.

4. The method in Claim 2, wherein said step of deflecting said writing beam along said first axis is carried out by the steps of:
providing an actuated, tiltable, transmissive plate; and
tilting said plate in response to said phase difference to displace said writing beam along said first axis.

5. The method in Claim 2, wherein said step of deflecting said writing beam along said first axis is carried out by the steps of:
providing actuated, tiltable, transmissive plates for each writing beam primary color; and
tilting said plates in response to said phase difference to displace primary color writing beams along said first axis.

6. The method in Claim 2, further comprising the steps of:
combining said primary color writing beams to converge at each pixel location.

7. In raster scan film recording with constant film transport speed along a first axis and constant periodic scan line motion along a second axis transverse to said first axis, an apparatus for aligning each recorded image along said first axis, said apparatus comprising:
a second axis deflector adapted to deflect a writing beam parallel to said second axis for each scan line;
a first reference signal generator adapted to generate a first reference signal each time a reference perforation is detected in a moving filmstrip;
a second reference signal generator adapted to generate a second reference signal each time said second axis deflector is ready to begin a new scan line;
a phase detector adapted to detect the phase difference between said first and second reference signals; and
a first axis deflector adapted to, in response to said phase difference, deflect said writing beam along said first axis to begin the first scan line of each new filmstrip image at substantially the same distance from said reference perforation.

8. The apparatus in Claim 7, wherein said first axis deflector comprises an optical deflector.

9. The apparatus in Claim 8, further comprising:
an actuated, tiltable mirror, adapted to be tilted in response to said phase difference to deflect said writing beam along said first axis.

10. The apparatus in Claim 8, further comprising:
an actuated, tiltable, transmissive plate, adapted to tilted in response to said phase difference to displace said writing beam along said first axis.

11. The apparatus in Claim 8, further comprising:
actuated, tiltable, transmissive plates for each writing beam primary color,
wherein said plates are adapted to be tilted in response to said phase difference to displace primary color writing beams along said first axis.

12. The apparatus in Claim 8, further comprising:
a combiner adapted to combine said primary color writing beams to converge at each pixel location.
